# EUROPÄISCHE PATENTSCHRIFT

(11) **EP 1 843 977 B1**
(45) Veröffentlichungstag und Bekanntmachung des Hinweises auf die Patenterteilung: **01.04.2020**
(21) Anmeldenummer: 06703807.5
(22) Anmeldetag: 25.01.2006
(51) Int. Cl.: C01D 17/00

(54) **VERFAHREN ZUR HERSTELLUNG VON CESIUMHYDROXIDLÖSUNGEN**
METHODS FOR PRODUCING CESIUM HYDROXIDE SOLUTIONS
PROCEDE POUR PRODUIRE DES SOLUTIONS D HYDROXIDE DE CESIUM

(30) Priorität: 27.01.2005 DE 102005003999
(43) Veröffentlichungstag der Anmeldung: 17.10.2007
(73) Patentinhaber: Albemarle Germany GmbH, 65926 Frankfurt am Main (DE)
(72) Erfinder: HARMS, Gerd, J., 38640 Goslar (DE); SCHIEDT, Alexander, 38729 Hahausen (DE); BICK, Manfred, 61440 Oberursel (DE); HILDEBRANDT, Wolfgang, 38685 Langelsheim (DE)
(74) Vertreter: Rottmayer, Hans
(86) Internationale Anmeldenummer: PCT/EP2006/000634
(87) Internationale Veröffentlichungsnummer: WO 2006/079514

(56) Entgegenhaltungen:
- DD-A1- 268 925
- DE-C1- 4 313 480
- US-A- 3 207 571
- US-A1- 2002 143 209

## Beschreibung

Die Erfindung betrifft ein Verfahren zur Herstellung von Cesiumhydroxidlösungen.

Die gängigen Verfahren zur Herstellung von Cesiumverbindungen gehen von cesiumhaltigen Erzen wie Pollucit aus. So beschreibt das US-Patent 6 015 535 ein Verfahren zur Herstellung konzentrierter und gereinigter Cesiumsalzlösungen. Dieses Verfahren beinhaltet den Aufschluss des Erzes mit einer überstöchiometrischen Menge an Schwefelsäure, die Reinigung des so gewonnenen Cesiumaluminiumsulfat-Hydrates durch Umkristallisation, die Ausfällung des Aluminiums mit aufgeschlämmtem Kalk Ca(OH)₂ und/oder Calciumcarbonat und die Abtrennung des aus Calciumsulfat-Hydrat (Gips) und Aluminiumhydroxid bestehenden Niederschlages von der Cesiumsulfatlösung. Es schließt sich eine Umsetzung dieser Lösung mit einer Calciumhydroxidaufschlämmung und einer Säure unter Beibehaltung eines pH-Wertes von 7 bis 8 an. Anschließend erfolgt die Abtrennung des aus Calciumsulfat bestehenden Rückstandes von der durch das Anion der Säure bestimmten Cesiumsalzlösung. Die Reinigung der Cesiumsalzlösung erfolgt durch ein mehrstufiges "Polishing", bei dem die Lösung mit Bariumhydroxid alkalisch gestellt und anschließend mit Kohlendioxid bzw. Carbonat versetzt wird, wobei Erdalkalien sowie Sulfat gefällt und abgetrennt werden. Die bis dahin stark verdünnte Cesiumsalzlösung wird abschließend durch Verdampfung aufkonzentriert, wobei die Aufkonzentration bis zur Gewinnung eines Feststoffes gehen kann.

Das Patent DE 43 13 480 C1 beschreibt die Herstellung einer Cesiumhydroxidlösung durch Umsetzung von Cesiumaluminiumsulfat-Hydrat bzw. einer Cesiumsulfatlösung mit Calciumhydroxid gemäß den Gleichungen

(1) CsAl(SO₄)₂ + 2 Ca(OH)₂ → CsOH + Al(OH)₃↓ + 2 CaSO₄↓

(2) Cs₂SO₄ + Ca(OH)₂ → 2 CsOH + CaSO₄↓

Allerdings sind die erzielten Ausbeuten sehr unbefriedigend. In der US-Patentanmeldung 2002/0143209 A1 wird versucht, dem dadurch abzuhelfen, dass die Reaktion gemäß Gleichung (2) mehrfach wiederholt wird, wobei das in einem Gemisch mit Cesiumsulfat vorliegende jeweils entstandene Cesiumhydroxid mit der gewünschten Säure neutralisiert wird.

Bedingt durch die vergleichsweise bessere Löslichkeit des Hydroxids des Bariums, aber der sehr geringen Löslichkeit des Sulfates ist die Umsetzung

(3) Cs₂SO₄ + Ba(OH)₂ → 2 CsOH + BaSO₄↓

nahezu vollständig zur Seite des Cesiumhydroxids verschoben. Im US-Patent 3 207 571 wird die Reaktion einer Cesiumsulfatlösung mit einer wässerigen Bariumhydroxidlösung beschrieben. Erhalten wird eine verdünnte Cesiumhydroxidlösung, welche vom festen Bariumsulfat abgetrennt wird. Diese Lösung kann direkt mit Säure in die entsprechende Cesiumsalzlösung umgewandelt werden; oder aus dieser Lösung wird durch Zugabe von CO₂ eine Carbonatlösung hergestellt, wobei aus dieser durch Aufkonzentration überschüssiges Barium als Bariumcarbonat ausfällt und abgetrennt werden kann.

Die beschriebenen Verfahren haben eine Reihe von Nachteilen: So ist nach dem in der US-Patentanmeldung 2002/0143209 A1 vorgeschlagenen Weg Cesiumhydroxid nur im Gemisch mit anderen Cesiumsalzen herstellbar. Die im US-Patent 3 207 571 angegebene Herstellmethode führt zu stark verdünnten Cesiumhydroxidlösungen mit hohen, nicht definierten Gehalten an Sulfat und/oder Barium oder hat eine Cesiumcarbonatlösung als Endprodukt. Dieses Verfahren liefert keine Cesiumhydroxidlösungen.

Cesiumhydroxidlösungen finden zahlreiche Anwendungen, z.B. als Katalysatoren und dienen als Ausgangsprodukt für die Herstellung aller neutraler und basischer Cesiumsalze sowie von festem Cesiumhydroxid und weiteren Cesiumverbindungen. Weil eine nachträgliche Reinigung der Verbindungen Cesiumhydroxidlösungen gewünscht. Weiterhin wird eine hohe Konzentration der Cesiumhydroxidlösungen angestrebt.

Die Aufgabe der vorliegenden Erfindung ist es, die Nachteile des Standes der Technik zu überwinden und ein Verfahren zur Herstellung einer wässrigen Cesiumhydroxidlösung zu entwickeln, die eine Cesiumhydroxidkonzentration von mindestens 45 Gew.-% aufweist und sich durch einen möglichst niedrigen Gehalt an mehrwertigen Kationen im allgemeinen und Erdalkalikationen im besonderen auszeichnet, sowie niedrige Gehalte an Sulfat und Carbonat aufweist.

Die Aufgabe wird gelöst durch ein Verfahren zur Herstellung von Cesiumhydroxidlösungen, bei dem
- A) cesiumhaltiges Erz unter Bildung eines in der Kälte schwerlöslichen Cesiumaluminiumsulfathydrates (Cesiumalaun) mit Schwefelsäure aufgeschlossen wird,
   - B) der gebildete Cesiumalaun als Lösung von den festen Erzrückständen abgetrennt wird,
- C) aus der Cesiumalaunlösung das Aluminium ausgefällt wird unter Bildung einer Cesiumsulfatlösung,
   - D) die gebildete Cesiumsulfatlösung mit Bariumhydroxid oder Strontiumhydroxid umgesetzt wird unter Bildung einer Cesiumhydroxidlösung und
- E) die gebildete Cesiumhydroxidlösung aufkonzentriert und gereinigt wird, in der Weise, dass der Aufschluss A) mit einer überstöchiometrischen Menge Schwefelsäure (relativ zur eingesetzten Menge Erz) durchgeführt wird, wobei beim Aufschluss das Mischungsverhältnis von cesiumhaltigem Erz (welches einen Cs-Anteil von 20 bis 24 Gew.-% aufweist) zu Wasser zu konzentrierter Schwefelsäure = 1,0 : (1,2 bis 1,6) : (1,2 bis 1,6) beträgt und der gebildete Cesiumalaun B) nach Abtrennung von den festen Erzrückständen durch 6 Umkristallisationen und der Verwendung der Mutterlaugen bei der 1., 2. und 3. Umkristallisationen und der Durchführung der 4., 5. und 6. Umkristallisation mit vollentsalztem Wasser gereinigt wird, die in C) gebildete Cesiumsulfatlösung auf einen Gehalt von 20 bis 70 Gew.-% Cesiumsulfat aufkonzentriert und unter Zusatz von Aktivkohle als Filterhilfsmittel weiter gereinigt wird, wobei die zugesetzte Menge Aktivkohle 0,5 bis 5 Gew.-% bezogen auf die gelöste Menge Cesiumsulfat beträgt, die Umsetzung D) erst stöchiometrisch und anschließend durch Zugabe weiterer Base (bevorzugt Ba(OH)₂ oder Sr(OH)₂) zu dem noch zwischen 80 und 100 °C heißen Reaktionsgemisch durchgeführt wird, wobei die Zugabemenge der Base - bezogen auf die Menge Cesiumhydroxid - 0,7 bis 3,5 Gew.-% beträgt und die in E) gebildete Cesiumhydroxidlösung durch Eindampfen auf einen CsOH-Gehalt von 45 bis 55 Gew.-% aufkonzentriert sowie mit Kohlendioxid oder einem in der Hydroxidlösung löslichen Carbonat oder Hydrogencarbonat versetzt wird, wobei die dabei einzusetzende Menge an Kohlendioxid bezogen auf 1000 kg Cesiumhydroxid zwischen 2,5 bis 10 kg beträgt und die Zugaben an Carbonat oder Hydrogencarbonat der Zugabe an Kohlendioxid entsprechen und entsprechend umzurechnen sind.

Bei der Umsetzung der gebildeten Cesiumsulfatlösung zur Cesiumhydroxidlösung ist der Einsatz von Bariumhydroxid bevorzugt.

Als cesiumhaltiges Erz kann jedes cesiumhaltige Erz oder Material eingesetzt werden. Bevorzugt wird jedoch Pollucit eingesetzt. Ein bevorzugter Pollucit weist einen Cesiumanteil von 20 bis 24 Gew.-% auf. Die Korngröße des eingesetzten Erzes liegt bevorzugt bei 90 Gew.-%, < 100 µm und wird gegebenenfalls durch Mahlung des Erzes erreicht.

Für die Aufschlussreaktion kann folgende Reaktionsgleichung angegeben werden:

(4) 2 CsAlSi₂O₆ ● H₂O + 4 H₂SO₄ + 18 H₂O → 2 CsAl(SO₄)₂ ● 12 H₂O + 4 SiO₂↓

Bevorzugt wird der Aufschluss mit einer überstöchiometrischen Menge Schwefelsäure (relativ zur eingesetzten Menge Erz) durchgeführt. Bevorzugt beträgt das Mischungsverhältnis von cesiumhaltigem Erz (mit einem Cs-Anteil von 20 bis 24 Gew.-%) : Wasser : konzentrierter Schwefelsäure = 1,0 : (1,0 bis 1,8) : (1,0 bis 1,8), besonders bevorzugt 1,0 : (1,2 bis 1,6) : (1,2 bis 1,6) und ganz besonders bevorzugt 1,0 : (1,3 bis 1,5) : (1,3 bis 1,5).

Der Aufschluss wird bevorzugt dergestalt durchgeführt, dass die Mischung aus cesiumhaltigem Erz, Wasser und Schwefelsäure für einen Zeitraum von mindestens 2 Stunden bei einer Temperatur von > 90 °C erhitzt wird. Bevorzugt ist eine Aufschlussdauer von mindestens 3 Stunden. Die bevorzugte Mindesttemperatur beträgt 100 °C, besonders bevorzugt 120 °C. Eine bevorzugte Maximaltemperatur entspricht der Siedetemperatur des Reaktionsgemisches. Bevorzugt wird evtl. verdampfendes Wasser ersetzt. Die Reaktion kann auch unter Überdruck durchgeführt werden, z.B. bei 0,5 bis 6 bar Überdruck, bevorzugt 1 bis 6 bar Überdruck.

Sollte das cesiumhaltige Erz von sich aus nicht über einen genügend hohen Aluminiumanteil verfügen oder sollte beim Aufschluss nicht genügend Aluminium mit aufgeschlossen werden und in Lösung gehen, kann in einer bevorzugten Ausführungsform des Verfahrens während oder nach dem Aufschluss Aluminium in Form von Aluminiumsulfat zugegeben werden, so dass für die Bildung des Cesiumalauns ein hinreichend hohes Angebot an Aluminium zur Verfügung steht. Ohne ausreichendes Angebot an Aluminium könnte es zu Ausbeuteverlusten kommen, die Durchführung des Verfahrens als solches wird durch ein nicht ausreichendes Angebot an Aluminium jedoch nicht beeinträchtigt. Bevorzugt beträgt das Molverhältnis von Al zu Cs mindestens 1 : 1. Besonders bevorzugt wird mit einem leichte Aluminiumüberschuss gearbeitet, wobei das Al : Cs Molverhältnis bis 1,5 : 1 beträgt.

Nach Abschluß der Aufschlussreaktion und Abkühlung der Reaktionsmischung kristallisiert ein durch andere Alkalielemente stark verunreinigtes Cesiumaluminiumsulfat-Hydrat aus. Bevorzugt wird der Reaktionsmischung Wasser oder Prozesslösungen aus späteren Verfahrensschritten (z.B. Mutterlaugen aus der nachfolgenden Abtrennung des Cs-Alauns und/oder der nachfolgenden Kristallisation) zugegeben, um Geschwindigkeit und Vollständigkeit der Kristallisation zu verbessern. Die zugegebene Wassermenge oder Menge an Prozesslösung beträgt bevorzugt mindestens 1,2 Gewichtsteile pro Gewichtsteil eingesetztem Erz.

Der Säureüberschuss wird bevorzugt nach Beendigung der Reaktion und Abkühlung der Reaktionsmischung sowie gegebenenfalls Verdünnung der Reaktionsmischung abgetrennt. Die Abtrennung kann z.B. durch Dekantieren, Filtrieren oder Zentrifugieren erfolgen. Der abgetrennte Säureüberschuss kann, gegebenenfalls nach Aufkonzentrierung, beim nächsten Aufschluss wiedereingesetzt werden. Die genannten Mischungsverhältnisse schließen den Anteil an zurückgeführter Säure mit ein.

Die Abtrennung des gebildeten Cesiumalauns von den festen Erzrückständen kann bevorzugt wie folgt durchgeführt werden:
Das Reaktionsgemisch wird in Wasser und/oder Prozesslösungen unter Rühren aufgeschlämmt und auf eine Temperatur von > 80 °C erhitzt. Die bevorzugte Mindesttemperatur beträgt 95 °C, besonders bevorzugt 100 °C. Eine bevorzugte Maximaltemperatur entspricht der Siedetemperatur des Reaktionsgemisches.

Bevorzugt wird eventuell verdampfendes Wasser ersetzt. Die Auflösung kann auch unter Überdruck durchgeführt werden, z.B. bei 0,5 bis 6 bar Überdruck, bevorzugt 1 bis 6 bar Überdruck. Anschließend wird die heiße Lösung des Cesiumalauns von den Erzrückständen abgetrennt; die Abtrennung kann z.B. durch Dekantieren, Filtrieren oder Zentrifugieren erfolgen. Bevorzugt wird dieser Prozess mehrfach wiederholt, um den Cesiumalaun möglichst vollständig von den Erzrückständen abzutrennen. Die heiße Cesiumalaunlösung kann in einen weiteren Reaktor überführt werden.

Alternativ kann das Verfahren dergestalt durchgeführt werden, dass nach dem Aufschluss vor dem Abkühlen der gelöste Cesiumalaun zusammen mit der Schwefelsäure vom Erzrückstand abgetrennt wird. Anschließend kann der Cesiumalaun aus der Aufschlusssäure (Schwefelsäure) auskristallisiert werden. Dabei sind aufgrund der stark korrosiven Wirkung der heißen Lösung besondere Werkstoffe erforderlich.

In einer bevorzugten Verfahrensvariante wird aus der von den festen Erzrückständen befreiten Cesiumalaunlösung durch Abkühlen fester Cesiumalaun auskristallisiert und besonders bevorzugt durch Umkristallisieren gereinigt. Das Umkristallisieren kann ein- oder mehrfach wiederholt werden. Dabei werden insbesondere die Verunreinigungen an anderen Alkalimetallverbindungen entfernt. Die Mutterlaugen aus der Umkristallisation können weiter vorne im Verfahren als Prozesslösungen wieder eingesetzt werden. Mutterlaugen mit zu hohen Gehalten an Alkalimetallsalzen werden bevorzugt abgestoßen.

Dabei wird der Cesiumalaun in einer zur Lösung des gesamten Salzes ausreichenden Menge Wasser in der Hitze gelöst und anschließend bis auf ca. 20 °C abgekühlt, wobei die überstehende Mutterlauge abgetrennt und gegebenenfalls an anderer Stelle des Verfahrens wieder eingesetzt wird. Diese Umkristallisation wird bevorzugt mehrfach durchgeführt. Dabei können die ersten Umkristallisationen mit Mutterlaugen und die weiteren Umkristallisationen mit Wasser, bevorzugt mit vollentsalztem Wasser (VE-Wasser) durchgeführt werden.

Überraschenderweise wurde gefunden, dass bei z.B. 6 Umkristallisationen und der Verwendung der Mutterlaugen bei der 1., 2.. und 3. Umkristallisationen und der Durchführung der 4., 5. und 6. Umkristallisation mit vollentsalztem Wasser (VE-Wasser) die Gehalte an beispielweise Rb auf < 10 ppm, bezogen auf den als Cesiumhydroxid gerechneten Inhalt an Cesiumalaun gesenkt werden können. Bevorzugt werden auf den Erzeinsatz bezogen 3 bis 4 Gew.-Teile VE-Wasser im entsprechenden Umkristallisationsschritt eingesetzt.

In manchen Fällen kann für die Umkristallisationen ultrareines Wasser mit einem spezifischen Widerstand von > 10 MΩ eingesetzt werden. Dies ist insbesondere dann der Fall, wenn der Gehalt von aus natürlichen und anthropogenen Quellen stammenden radioaktive Kationen wie ⁸⁷Rb bzw. ¹³⁷Cs reduziert werden soll.

Im nächsten Verfahrensschritt erfolgt die Abtrennung des Aluminiums aus dem Cesiumaluminiumsulfat-Hydrat (Cesiumalaun) durch Ausfällung von festem Aluminiumhydroxid mit Hilfe einer Base, beispielsweise Calciumhydroxid, wofür folgende Reaktionsgleichung angegeben werden kann:

(5) 2 CsAl(SO₄)₂ ●12 H₂O + 3Ca(OH)₂ → Cs₂SO₄ + 2 Al(OH)₃/3 [CaSO₄ ● xH₂O]↓ + (24 - x)H₂O

Für die Ausfällung des Aluminiumhydroxids kann prinzipiell jede basische Verbindung eingesetzt werden, mit der in der Reaktionsmischung ein für die Fällung des Aluminiumhydroxids geeigneter pH-Wert eingestellt werden kann (Gl. (6)). Ein geeigneter pH-Wert liegt zwischen 4 bis 9, vorzugsweise bei 7 bis 8.

(6) 2 CsAl(SO₄)₂●12 H₂O + 6 B(OH) → Cs₂SO₄ + 2 Al(OH)₃ + 3 B₂SO₄[↓] + 24 H₂O

Als basische Verbindungen werden bevorzugt eine oder mehrere der Hydroxide, Carbonate oder Hydrogencarbonate der Elemente der 1. und 2. Hauptgruppe des Periodensystems eingesetzt, sind jedoch nicht auf diese beschränkt. Eine möglichst reine Cesiumsulfatlösung, d.h. eine Lösung, die möglichst geringe Anteile des Sulfates des eingesetzten Base enthält, ist um so besser herzustellen, je geringer die Löslichkeit dieser Sulfatverbindung ist. Dies ist insbesondere bei den Sulfaten der Erdalkalielemente Calcium, Strontium und Barium der Fall, wobei aus wirtschaftlichen Gründen vorzugsweise gelöschter Kalk (Calciumhydroxid) oder auch Kalk (Calciumcarbonat) zum Einsatz kommen.

Die Umsetzung wird in wässeriger Lösung so durchgeführt, dass Cesiumalaun und die basische Verbindung (z.B. gelöschter Kalk oder Kalk) miteinander zur Reaktion gebracht werden, so dass nach Abschluss der Umsetzung das Reaktionsgemisch, enthaltend eine Cesiumsulfatlösung, Aluminiumhydroxid und das Sulfat der zugegebenen Base (z.B. Gips), einen pH-Wert von 4 bis 9, bevorzugt von 6,5 bis 7,5 aufweist. Vorteilhaft ist es, vor der Umsetzung den Cesiumalaun in Lösung zu bringen. Besonders bevorzugt wird die Reaktion bei einer Temperatur von > 60 °C, ganz besonders bevorzugt bei 90 bis 110 °C durchgeführt. Z.B. kann eine auf eine Temperatur von ≥ 100 °C erhitzte gesättigte Lösung von Cesiumaluminiumsulfat (Cesiumalaun) vorgelegt und mit einer Suspension aus gelöschtem Kalk oder Kalk unter guter Durchmischung umgesetzt werden, bis der gewünschte pH-Wert erreicht ist.

Um zum einen eine möglichst vollständige Umsetzung zu erreichen, und um zum anderen die Filtrierbarkeit des Niederschlags zu verbessern, kann die Reaktionsmischung bevorzugt für einen Zeitraum von mindestens 1 Stunde unter Rühren bei einer Temperatur von ≥ 100 °C aufgekocht werden. Diese Verfahrensvariante hat gegenüber der im Patent US 3 207 571 beschriebenen Vorgehensweise (Zusatz von Cesiumalaun zu einer Kalk-Suspension) den Vorteil, dass die eingesetzte basische Verbindung nahezu vollständig umgesetzt und die Bildung einer Präzipitatschicht auf den Partikeln der eingesetzten basischen Verbindung (z.B. Calciumhydroxid) vermieden wird.

Weiterhin wurde gefunden, dass bei Einsatz von gelöschtem Kalk (Calciumhydroxid) unter den beschriebenen Reaktionsbedingungen nicht - wie im Patent US 6 015 535 vermutet - Calciumsulfat-Dihydrat (x = 2 in Gl. (5)), sondern Calciumsulfat-Hemihydrat (x = 0,5 in Gl. (5)) gebildet wird, was zu einer Reduzierung der Masse des abzutrennenden Niederschlags führt.

Für die Abtrennung der Cesiumsulfatlösung kommen die üblichen, dem Stand der Technik entsprechenden Verfahren der Fest-Flüssig-Trennung zum Einsatz. Bei der Auswahl ist insbesondere zu berücksichtigen, dass das bei dem beschriebenen Herstellungsweg anfallende röntgenamorphe Aluminiumhydroxid sich nur schwer entwässern und waschen lässt.

Die auf die beschriebene Weise hergestellte Cesiumsulfatlösung kann unter anderem aufgrund einer hohen Verdünnung vergleichsweise geringe Gehalte an Cesium, nämlich in der Regel < 5 Gew.-%, überwiegend 2,5 bis 3,0 Gew.-%, aufweisen. Die hohe Verdünnung kann daher rühren, dass z.B. beim Umkristallisieren zum Cesiumalaun die 2 bis 3-fache Gewichtsmenge Wasser zugegeben wird, dass z.B. die basische Verbindung (Fällungsmittel, z.B. gelöschter Kalk) als Suspension der Cesiumalaunlösung zugegeben wird, und dass z.B. bei eventuell vorgenommenen Reinigungsoperationen Waschlösungen mit dem Erstfiltrat vereinigt werden.

In einer bevorzugten Variante des erfindungsgemäßen Verfahrens wird die erhaltene Cesiumsulfatlösung aufkonzentriert. Dies kann z.B. durch Eindampfen erfolgen. Bevorzugt wird die Lösung auf einen Gehalt von 20 bis 70 Gew.-%, besonders bevorzugt 40 bis 60 Gew.-%, Cesiumsulfat aufkonzentriert. Überraschend wurde gefunden, dass dabei noch vorhandene Verunreinigungen (z.B. Mg, Ca, Sr, Ba) ausgefällt werden. Der Reinigungseffekt kann dadurch verbessert werden, dass der Lösung als Filterhilfsmittel Aktivkohle zugegeben wird. Die zugesetzte Menge Aktivkohle beträgt bevorzugt 0,5 bis 5 Gew.-%, besonders bevorzugt 1 bis 1,5 Gew.-%, bezogen auf die gelöste Menge Cesiumsulfat. Auf diese Weise werden Cesiumsulfatlösungen erhalten, deren Verunreinigungen an Erdalkalielementen, bezogen auf den Inhalt als Cesiumsulfat, folgende Werte annehmen: Mg ≤ 0,25 Gew.-%, Ca ≤ 0,1 Gew.-%, Sr ≤ 0,01 Gew.-% und Ba ≤ 0,01 Gew.-%.

Die erhaltene Cesiumsulfatlösung wird im sich anschließenden Verfahrensschritt in eine Cesiumhydroxidlösung überführt. Die stöchiometrische Umsetzung einer Cesiumsulfatlösung zu einer Cesiumhydroxidlösung lässt sich prinzipiell mit jeder Base M(OH) durchführen. Voraussetzung ist, dass der Unterschied der Löslichkeiten der Base M(OH) und des korrespondierenden Sulfats M₂SO₄ groß genug und somit das Gleichgewicht gemäß Gleichung (7) in hinreichendem Umfang zur Seite der Produkte CsOH und M₂SO₄ verschoben ist:

(7) Cs₂SO₄ + 2 M(OH) → 2 CsOH + M₂SO₄↓

Die Cesiumsulfatlösung wird (bevorzugt stöchiometrisch) mit Bariumhydroxid oder Strontiumhydroxid (bevorzugt ist Bariumhydroxid) umgesetzt. Dabei bildet sich eine Cesiumhydroxidlösung. Das ausgefallene Barium- oder Strontiumsulfat und weitere bei dieser Umsalzung ("Kaustifizierung") anfallende schwerlösliche Verunreinigungen (z.B. Chrom-, Eisen- und/oder Magnesiumhydroxid) werden in bekannter Weise abgetrennt. Erhalten wird eine Cesiumhydroxidlösung.

Die Durchführung der Kaustifizierung kann dergestalt durchgeführt werden, dass eine dem Gehalt der Cesiumsulfat-Lösung stöchiometrisch entsprechende Menge Bariumhydroxid als Suspension hergestellt wird, wobei das Gewichtsverhältnis Bariumhydroxid in Form des Monohydrats zu Wasser 1 : (1,5 bis 4), vorzugsweise 1 : 2,0 beträgt, diese Suspension auf eine Temperatur zwischen 80 und 100 °C, vorzugsweise zwischen 95 und 100 °C erhitzt und dann unter intensiver Vermischung der ebenfalls auf eine Temperatur zwischen 80 und 100 °C, vorzugsweise zwischen 95 und 100 °C erhitzten Cesiumsulfat-Lösung zugesetzt wird. Erfahrungsgemäß können die Gehalte der Cesiumsulfat-Lösung schwanken, so dass es sich als hilfreich erwiesen hat, ein Prüfverfahren zur Bestimmung des Äquivalenzpunktes der Reaktion nach Gl. (7) anzugeben.

Für dieses Prüfverfahren werden zwei Prüflösungen hergestellt, wobei es sich bei der einen Lösung um eine carbonathaltige Cesiumlösung, vorzugsweise eine Cesiumhydrogencarbonat-Lösung handelt, bei der anderen Prüflösung um eine Bariumsalz-Lösung. Der Test wird nunmehr so durchgeführt, dass eine Probe des Reaktionsgemisches vom Feststoffanteil befreit und jeweils ein Teil der Lösung mit den Prüflösungen vermischt wird. Aus der visuell beurteilten oder auch gemessenen Trübung des Gemisches der Prüf- mit den Reaktionslösungen wird der Äquivalenzpunkt bestimmt.

Die auf die oben beschriebene Weise hergestellte rohe Cesiumhydroxidlösung ist mit einer Konzentration zwischen 1 und 5 Gew.-% sehr verdünnt und kann eine Reihe von Verunreinigungen enthalten, beispielsweise Strontium, Calcium, Barium und Sulfat, wobei überraschenderweise die Löslichkeit an Bariumsulfat in Cesiumhydroxidlösungen höherer Konzentration zunimmt. Die rohe, verdünnte Cesiumhydroxidiösung kann bevorzugt noch weiter gereinigt werden. Dies kann durch einen oder mehrere der folgenden Verfahrensschritte geschehen.

Nach Beendigung der oben beschriebenen Fällungsreaktion (bei der Cesiumsulfatlösung mit Ba(OH)₂ oder Sr(OH)₂ reagiert) kann der erhaltenen Mischung aus Cesiumhydroxidlösung und gefällten Sulfaten eine weitere Base (bevorzugt Ba(OH)₂ oder Sr(OH)₂) zugegeben werden; vorzugsweise erfolgt diese Zugabe zu dem noch zwischen 80 und 100 °C, vorzugsweise zwischen 95 und 100°C heißen Reaktionsgemisch. Die Zugabemenge dieser Base beträgt - bezogen auf die Menge Cesiumhydroxid - bevorzugt 0,7 bis 3,5 Gew.-% und ganz bevorzugt 1,5 bis 2,5 Gew.-%. Nach Abkühlung der Suspension werden dann das ausgefallene Barium- bzw. Strontiumsulfat sowie anfallende schwerlösliche Verunreinigungen wie oben beschrieben von der Cesiumhydroxidlösung abgetrennt.

Die Durchführung der Kaustifizierung ist nicht auf den angegebenen Temperaturbereich beschränkt, sondern kann unter entsprechendem Überdruck auch bei höheren Temperaturen erfolgen.

Die erhaltene Cesiumhydroxidlösung kann z.B. durch Eindampfen aufkonzentriert werden, z.B. auf einen CsOH-Gehalt von 10 bis 80 Gew.-%, bevorzugt 45 bis 55 Gew.-%. Dabei bilden sich unter Umständen sehr feinteilige Feststoffe (z.B. Carbonate und/oder Hydroxide), die entsprechend dem Stand der Technik abgetrennt werden können. Bei der Abtrennung kann Aktivkohle als Filterhilfsmittel eingesetzt werden.

Die erhaltene Cesiumhydroxidlösung (bevorzugt ist eine aufkonzentrierte Cesiumhydroxidlösung) kann mit Kohlendioxid oder einem in der Hydroxidlösung löslichen Carbonat oder Hydrogencarbonat, bevorzugt der Alkalimetalle, besonders bevorzugt des Cesiums, versetzt werden. Die dabei einzusetzende Menge an Kohlendioxid beträgt (jeweils bezogen auf 1000 kg Cesiumhydroxid) zwischen 2,5 bis 10 kg, bevorzugt zwischen 3 und 6 kg und ganz bevorzugt zwischen 4 und 4,5 kg; die Zugaben an Carbonat oder Hydrogencarbonat entsprechen der Zugabe an Kohlendioxid und sind entsprechend umzurechnen. Die anfallenden, unter Umständen sehr feinteiligen Fällungsprodukte werden in bekannter Weise von der Lösung abgetrennt. Dabei kann Aktivkohle als Filterhilfsmittel eingesetzt werden.

Mit Hilfe eines oder mehrerer dieser fakultativen Verfahrensschritte ist es möglich, Cesiumhydroxidlösungen zu erhalten, die eine bevorzugte Konzentration von 45 bis 55 Gew.-% CsOH aufweisen. Die Verunreinigungen betragen, jeweils bezogen auf den Inhalt an wasserfreiem Cesiumhydroxid: mehrwertige Kationen (z.B. Al, Fe, Cr, Mn) in Summe ≤ 20 ppm, einzeln je ≤ 5 ppm; Erdalkalikationen Mg ≤ 2 ppm, Ca ≤ 10 ppm, Sr ≤ 5 ppm, Ba ≤ 15 ppm; Alkalikationen Li ≤ 10 ppm, Na ≤ 200 ppm, K ≤ 300 ppm, Rb ≤ 10 ppm; Chlorid ≤ 200 ppm; SiO₂ ≤ 50 ppm; P₂O₅ ≤ 5 ppm; Sulfat ≤ 100 ppm; Carbonat als CO₂ ≤ 0,5 Gew.-%.

Ein weiterer Vorteil des erfindungsgemäßen Verfahrens ist, dass die bei den genannten Verfahrensschritten entstehenden und abgetrennten Feststoffe, welche einen nicht unerheblichen Gehalt an Cesiumverbindungen aufweisen, innerhalb des Verfahrens an geeigneter Stelle wieder eingesetzt werden können und somit der Verlust an Cesium im Gesamtprozess minimiert werden kann. Als geeignete Stellen für den Einsatz der Feststoffe können die Umsetzung der Cesiumsulfat- zur Cesiumhydroxidlösung und/oder der Aufschluss des Erzes angegeben werden.

Der Gegenstand der Erfindung wird anhand der folgenden Beispiele näher erläutert:

### Beispiel 1:

In einem 1-I-Glaskolben wurde eine Lösung, bestehend aus 328 ml vollentsalztem Wasser (VE-Wasser) und 186 ml 96 %-iger Schwefelsäure, vorgelegt und dieser unter Rühren 219 g vermahlenes Polluciterz zugesetzt. Das Reaktionsgemisch wurde erhitzt und 4 Stunden am Rückfluss gekocht. Während des Abkühlens auf Raumtemperatur wurde die Reaktionsmischung mit 350 ml VE-Wasser verdünnt. Der gebildete Cesiumalaun wurde zusammen mit dem Erzrückstand über eine Filternutsche von der überstehenden Säure abgetrennt und 3 mal mit jeweils 100 ml VE-Wasser säurefrei gewaschen. Anschließend wurde der Feststoff in ein 1-I-Becherglas überführt und in 700 ml VE-Wasser gelöst. Die heiße Lösung wurde über ein Glasfaserfilter in ein 2-I-Becherglas filtriert und der Filterrückstand zweimal mit jeweils 500 ml heißem VE-Wasser gewaschen, wobei Stark- und Waschlösungen vereinigt wurden. Die Lösungen wurden bis auf Raumtemperatur unter Rühren abgekühlt. Nach Abstellen des Rührers und der Sedimentation des Alauns wurde die überstehende Mutterlauge dekantiert. Der Cesiumalaun wurde in 850 ml VE-Wasser umkristallisiert und die Mutterlauge dekantiert; die Umkristallisation wurde 5 mal wiederholt.

Der so gereinigte Cesiumalaun wurde in 500 ml VE-Wasser in der Hitze gelöst. In einem weiteren Becherglas wurde eine Suspension aus 150 ml VE-Wasser und 40 g wasserarmen Calciumoxid hergestellt, die der Cesiumalaunlösung unter Rühren in der Siedehitze zugesetzt wurde, bis die Reaktionsmischung einen pH-Wert von ca. 6,5 aufwies. Nach kurzem Aufkochen wurde das Gemisch abgekühlt, bis es eine Temperatur von ca. 40 °C erreicht hatte. Die Suspension wurde über ein Faltenfilter filtriert und 3 mal mit 100 ml ca. 40 °C warmem VE-Wasser gewaschen. Die Lösungen wurden vereinigt und auf ein Volumen von 65 ml eingeengt, 800 mg Aktivkohle eingerührt und die Lösung über eine Filternutsche von den festen Anteilen befreit.

Die Analyse der so erhaltenen Sulfatlösung ergab die in der Tabelle angegenenen Werte, wobei die Gehalte an Elementen auf den Inhalt an Cesiumsulfat bezogen sind:

| **Prüfmerkmal** | **Prüfwert** | |
|---|---|---|
| Gehalt an Cs₂SO₄ | 50,3 | Gew.-% |
| Li | 0,3 | ppm |
| Na | 65,0 | ppm |
| K | 110,0 | ppm |
| Rb | 4,0 | ppm |
| Ca | 525,0 | ppm |
| Mg | 0,11 | Gew.-% |
| Sr | 22,0 | ppm |
| Ba | 3,3 | ppm |
| Al | 0,3 | ppm |
| Cl | 51,0 | ppm |

### Beispiel 2

150 ml der in Beispiel 1 hergestellten 50 %-igen Cesiumsulfatlösung wurden mit VE-Wasser auf 2500 ml verdünnt und am Rückfluss bis zum Sieden erhitzt. In einem Becherglas wurde eine Suspension, bestehend aus 75 g Bariumhydroxid-Monohydrat und 200 g VE-Wasser bis auf ca. 95 °C erhitzt und 265 g der Suspension der heißen verdünnten Cesiumsulfatlösung unter intensivem Rühren am Siedepunkt zugesetzt. Eine kleine Probe des Reaktionsgemisches wurde entnommen, filtriert und jeweils eine Hälfte der klaren Lösung mit einigen Tropfen einer Cesiumhydrogencarbonat-Lösung bzw. einer Bariumsalzlösung versetzt. Bei gleicher Trübung beider Lösungen war die Umsetzung stöchiometrisch erfolgt. Daraufhin wurden noch einmal 6 g der Bariumhydroxid-Suspension zugesetzt, das Reaktionsgemisch auf 40 °C abgekühlt und über ein Faltenfilter filtriert. Der Filterrückstand wurde 6 mal mit je 100 ml 40 bis 50 °C warmem VE-Wasser gewaschen, alle Lösungen vereinigt und anschließend auf ein Volumen von 120 ml eingeengt und auf Raumtemperatur abgekühlt. Unter Rühren wurden 2,2 g Cesiumcarbonat in Form einer 50 %-igen Lösung sowie 1,5 g Aktivkohle zugesetzt und anschließend die Cesiumhydroxidlösung über eine Filternutsche filtriert. Die Analyse der so erhaltenen 50%igen Cesiumhydroxidlösung ergab folgende Werte (jeweils bezogen auf den Cesiumhydroxid-Inhalt)

| **Prüfmerkmal** | **Prüfwert** | |
|---|---|---|
| Gehalt an CsOH | 51,0 | Gew.-% |
| Li | 0,25 | ppm |
| Na | 76,0 | ppm |
| K | 108,0 | ppm |
| Rb | 3,3 | ppm |
| Ca | 0,5 | ppm |
| Mg | 0,2 | ppm |
| Sr | 2,0 | ppm |
| Ba | 8,0 | ppm |
| Al | 0,6 | ppm |
| Fe | 0,2 | ppm |
| Cr | 0,3 | ppm |
| Mn | 0,1 | ppm |
| Sulfat | 15,0 | ppm |
| Cl | 59,0 | ppm |
| SiO₂ | 11,0 | ppm |
| P₂O₅ | 0,6 | ppm |
| Carbonat gerechnet als CO₂ | 0,18 | Gew.-% |

## Patentansprüche

1. Verfahren zur Herstellung von Cesiumhydroxidlösungen, bei dem
- A) cesiumhaltiges Erz unter Bildung eines in der Kälte schwerlöslichen Cesiumaluminiumsulfathydrates (Cesiumalaun) mit Schwefelsäure aufgeschlossen wird,
- B) der gebildete Cesiumalaun als Lösung von den festen Erzrückständen abgetrennt wird,
- C) aus der Cesiumalaunlösung das Aluminium ausgefällt wird unter Bildung einer Cesiumsulfatlösung,
- D) die gebildete Cesiumsulfatlösung mit Bariumhydroxid oder Strontiumhydroxid umgesetzt wird unter Bildung einer Cesiumhydroxidlösung und
- E) die gebildete Cesiumhydroxidlösung aufkonzentriert und gereinigt wird, **dadurch gekennzeichnet, dass** der Aufschluss A) mit einer überstöchiometrischen Menge Schwefelsäure, relativ zur eingesetzten Menge Erz, durchgeführt wird, wobei beim Aufschluss das Mischungsverhältnis von cesiumhaltigem Erz, welches einen Cs-Anteil von 20 bis 24 Gew.-% aufweist, zu Wasser zu konzentrierter Schwefelsäure = 1,0 : (1,2 bis 1,6) : (1,2 bis 1,6) beträgt und der gebildete Cesiumalaun B) nach Abtrennung von den festen Erzrückständen durch 6 Umkristallisationen und der Verwendung der Mutterlaugen bei der 1., 2. und 3. Umkristallisationen und der Durchführung der 4., 5. und 6. Umkristallisation mit vollentsalztem Wasser gereinigt wird, die in C) gebildete Cesiumsulfatlösung auf einen Gehalt von 20 bis 70 Gew.-% Cesiumsulfat aufkonzentriert und unter Zusatz von Aktivkohle als Filterhilfsmittel weiter gereinigt wird, wobei die zugesetzte Menge Aktivkohle 0,5 bis 5 Gew.-% bezogen auf die gelöste Menge Cesiumsulfat beträgt, die Umsetzung D) erst stöchiometrisch und anschließend durch Zugabe weiterer Base (bevorzugt Ba(OH)₂ oder Sr(OH)₂) zu dem noch zwischen 80 und 100 °C heißen Reaktionsgemisch durchgeführt wird, wobei die Zugabemenge der Base - bezogen auf die Menge Cesiumhydroxid - 0,7 bis 3,5 Gew.-% beträgt und die in E) gebildete Cesiumhydroxidlösung durch Eindampfen auf einen CsOH-Gehalt von 45 bis 55 Gew.-% aufkonzentriert sowie mit Kohlendioxid oder einem in der Hydroxidlösung löslichen Carbonat oder Hydrogencarbonat versetzt wird, wobei die dabei einzusetzende Menge an Kohlendioxid bezogen auf 1000 kg Cesiumhydroxid zwischen 2,5 bis 10 kg beträgt und die Zugaben an Carbonat oder Hydrogencarbonat der Zugabe an Kohlendioxid entsprechen und entsprechend umzurechnen sind.

2. Verfahren nach nach Anspruch 1, **dadurch gekennzeichnet, dass** das cesiumhaltiges Erz einen Cesiumanteil von 20 bis 24 Gew.-% aufweist.

3. Verfahren nach Anspruch 1 oder 2, **dadurch gekennzeichnet, dass** das cesiumhaltiges Erz eine Korngröße von 90 Gew.-%, < 100 µm aufweist.

4. Verfahren nach Anspruch 1, **dadurch gekennzeichnet, dass** das Mischungsverhältnis 1,0 : (1,3 bis 1,5) : (1,3 bis 1,5) beträgt.

5. Verfahren nach einem der Ansprüche 1 bis 4, **dadurch gekennzeichnet, dass** der Aufschluss dergestalt durchgeführt, dass die Mischung aus cesiumhaltigem Erz, Wasser und Schwefelsäure für einen Zeitraum von mindestens 2 Stunden bei einer Temperatur von > 90 °C erhitzt wird.

6. Verfahren nach Anspruch 5, **dadurch gekennzeichnet, dass** die Aufschlussdauer mindestens 3 Stunden beträgt.

7. Verfahren nach Anspruch 5 oder 6, **dadurch gekennzeichnet, dass** die Mindesttemperatur 100 °C beträgt.

8. Verfahren nach Anspruch 7, **dadurch gekennzeichnet, dass** die Mindesttemperatur 120 °C beträgt.

9. Verfahren nach einem der Ansprüche 1 bis 8, **dadurch gekennzeichnet, dass** die maximale Aufschlusstemperatur der Siedetemperatur des Reaktionsgemisches entspricht.

10. Verfahren nach einem der Ansprüche 1 bis 9, **dadurch gekennzeichnet, dass** beim Aufschluss eventuell verdampfendes Wasser ersetzt wird.

11. Verfahren nach einem der Ansprüche 1 bis 10, **dadurch gekennzeichnet, dass** die Aufschlussreaktion unter Überdruck durchgeführt wird.

12. Verfahren nach Anspruch 11, **dadurch gekennzeichnet, dass** der Überdruck 0,5 bis 6 bar beträgt.

13. Verfahren nach Anspruch 12, **dadurch gekennzeichnet, dass** der Überdruck 1 bis 6 bar beträgt.

14. Verfahren nach einem der Ansprüche 1 bis 13, **dadurch gekennzeichnet, dass** während oder nach dem Aufschluss der Reaktionsmischung Aluminium in Form von Aluminiumsulfat zugegeben wird.

15. Verfahren nach Anspruch 14, **dadurch gekennzeichnet, dass** das Molverhältnis von Al zu Cs mindestens 1 : 1 beträgt.

16. Verfahren nach Anspruch 14, **dadurch gekennzeichnet, dass** das Aluminium relativ zum vorhandenen Cesium im Überschuss zugegeben wird und das Molverhältnis von Al zu Cs maximal 1,5 : 1 beträgt.

17. Verfahren nach einem der Ansprüche 1 bis 16, **dadurch gekennzeichnet, dass** nach Abschluß der Aufschlussreaktion die Reaktionsmischung abgekühlt wird und bei der einsetzenden Kristallisation von Cesiumaluminiumsulfat-Hydrat (Cesiumalaun) Wasser oder Prozesslösungen aus späteren Verfahrensschritten (z.B. Mutterlaugen aus der nachfolgenden Abtrennung des Cs-Alauns und/oder der nachfolgenden Kristallisation) zugegeben werden.

18. Verfahren nach Anspruch 17, **dadurch gekennzeichnet, dass** die zugegebene Wassermenge oder Menge an Prozesslösung mindestens 1,2 Gewichtsteile pro Gewichtsteil eingesetztem Erz beträgt.

19. Verfahren nach einem der Ansprüche 1 bis 18, **dadurch gekennzeichnet, dass** der Säureüberschuss nach Beendigung der Aufschlussreaktion und Abkühlung der Reaktionsmischung sowie gegebenenfalls Verdünnung der Reaktionsmischung abgetrennt wird.

20. Verfahren nach einem der Ansprüche 1 bis 19, **dadurch gekennzeichnet, dass** zur Abtrennung des gebildeten Cesiumalauns von den festen Erzrückständen das nach Abtrennung des Säureüberschusses erhaltene Reaktionsgemisch in Wasser und/oder Prozesslösungen bei Temperaturen von mindestens 80 °C aufgeschlämmt und die heiße, Cesiumalaun enthaltende Lösung von den Erzrückständen abgetrennt wird.

21. Verfahren nach einem der Ansprüche 1 bis 19, **dadurch gekennzeichnet, dass** nach der Aufschlussreaktion und vor dem Abkühlen der Reaktionsmischung der gelöste Cesiumalaun zusammen mit der Schwefelsäure vom Erzrückstand abgetrennt wird.

22. Verfahren nach Anspruch 21, **dadurch gekennzeichnet, dass** aus der abgetrennten Lösung, enthaltend Cesiumalaun und Aufschlusssäure, der Cesiumalaun auskristallisiert wird.

23. Verfahren nach einem der Ansprüche 1 bis 21, **dadurch gekennzeichnet, dass** aus der von den festen Erzrückständen befreiten Cesiumalaunlösung durch Abkühlen fester Cesiumalaun auskristallisiert wird.

24. Verfahren nach Anspruch 1, **dadurch gekennzeichnet, dass** die Mutterlaugen aus der Umkristallisation weiter vorne im Verfahren als Prozesslösungen wieder eingesetzt werden.

## Claims

1. A method for producing cesium hydroxide solutions, wherein
- A) cesium-containing ore is disintegrated with sulfuric acid with formation of cesium aluminum sulfate hydrate (cesium alum) which is sparsely soluble in the cold,
- B) the cesium alum formed is separated as a solution from the solid ore residues,
- C) the aluminum is precipitated out of the cesium alum solution with formation of a cesium sulfate solution,
- D) the cesium sulfate solution formed is reacted with barium hydroxide or strontium hydroxide with formation of a cesium hydroxide solution,
and
- E) the cesium hydroxide solution formed is concentrated and purified, **characterized in that** the disintegration A) is carried out with an overstoichiometric quantity of sulfuric acid relative to the quantity of ore used, wherein, in the disintegration, the mixing ratio of cesium-containing ore, which has a Cs content of 20 to 24% by weight, to water to concentrated sulfuric acid = 1.0:(1.2 to 1.6):(1.2 to 1.6), and the cesium alum formed B) after separation of the solid ore residues is purified by 6 recrystallizations and the use of the mother liquors in the 1^{st}, 2^{nd} and 3^{rd} recrystallizations and by the performance of the 4^{th}, 5^{th} and 6^{th} recrystallizations with deionized water, the cesium sulfate solution formed in C) is concentrated to a content of 20 to 70% by weight of cesium sulfate and, with addition of activated charcoal as filtration agent, is further purified, wherein the added quantity of activated charcoal is 0.5 to 5% by weight with respect to the dissolved quantity of cesium sulfate, the reaction D) is run at first stoichiometrically and subsequently with addition of additional base (preferably Ba(OH)₂ or Sr(OH)₂) to the still hot reaction mixture at 80 to 100 °C, wherein the added quantity of the base - with respect to the quantity of cesium hydroxide - is 0.7 to 3.5% by weight, and the cesium hydroxide solution formed in E) is concentrated by evaporation to a CsOH content of 45 to 55% by weight and mixed with carbon dioxide or with a carbonate or hydrogen carbonate which is soluble in the hydroxide solution, wherein the quantity of carbon dioxide to be used in the process is, with respect to 1000 kg of cesium hydroxide, between 2.5 and 10 kg, and the additions of carbonate or hydrogen carbonate correspond to the addition of carbon dioxide and have to be converted accordingly.

2. The method according to Claim 1, **characterized in that** the cesium-containing ore has a cesium content of 20 to 24% by weight.

3. The method according to Claim 1 or 2, **characterized in that** the cesium-containing ore has a particle size of 90% by weight < 100 µm.

4. The method according to Claim 1, **characterized in that** the mixing ratio is 1.0: (1.3 to 1.5) : (1.3 to 1.5).

5. The method according to any one of Claims 1 to 4, **characterized in that** the disintegration is carried out in such a manner that the mixture of cesium-containing ore, water and sulfuric acid is heated for a time period of at least 2 hours at a temperature of > 90 °C.

6. The method according to Claim 5, **characterized in that** the disintegration duration is at least 3 hours.

7. The method according to Claim 5 or 6, **characterized in that** the minimum temperature is 100 °C.

8. The method according to Claim 7, **characterized in that** the minimum temperature is 120 °C.

9. The method according to any one of Claims 1 to 8, **characterized in that** the maximum disintegration temperature corresponds to the boiling temperature of the reaction mixture.

10. The method according to any one of Claims 1 to 9, **characterized in that**, during the distintegration, any water that evaporates is replaced.

11. The method according to any one of Claims 1 to 10, **characterized in that** the disintegration reaction is carried out at excess pressure.

12. The method according to Claim 11, **characterized in that** the excess pressure is 0.5 to 6 bar.

13. The method according to Claim 12, **characterized in that** the excess pressure is 1 to 6 bar.

14. The method according to any one of Claims 1 to 13, **characterized in that**, during or after the disintegration of the reaction mixture, aluminum is added in the form of aluminum sulfate.

15. The method according to Claim 14, **characterized in that** the molar ratio of Al to Cs is at least 1:1.

16. The method according to Claim 14, **characterized in that** the aluminum is added in excess relative to the cesium present and the molar ratio of Al to Cs is at most 1.5:1.

17. The method according to any one of Claims 1 to 16, **characterized in that**, after the completion of the disintegration reaction, the reaction mixture is cooled and, when the crystallization of cesium aluminum sulfate hydrate (cesium alum) starts, water or process solutions from subsequent method steps (for example, mother liquors from the subsequent separation of the Cs alum and/or the subsequent crystallization) is/are added.

18. The method according to Claim 17, **characterized in that** the added quantity of water or quantity of process solution is at least 1.2 parts by weight per part by weight of ore used.

19. The method according to any one of Claims 1 to 18, **characterized in that** the excess acid is separated after the end of the disintegration reaction and cooling of the reaction mixture as well as optionally dilution of the reaction mixture.

20. The method according to any one of Claims 1 to 19, **characterized in that**, for the separation of the cesium alum formed from the solid ore residues, the reaction mixture obtained after separation of the excess acid is slurried in water and/or processing solutions at temperatures of at least 80 °C and the hot cesium alum-containing solution is separated from the ore residues.

21. The method according to any one of Claims 1 to 19, **characterized in that**, after the disintegration reaction and before the cooling of the reaction mixture, the dissolved cesium alum together with the sulfuric acid is separated from the ore residue.

22. The method according to Claim 21, **characterized in that** the cesium alum is crystallized out of the separated solution containing cesium alum and disintegration acid.

23. The method according to any one of Claims 1 to 21, **characterized in that**, by cooling, solid cesium alum is crystallized out of the cesium alum solution rid of the solid ore residues.

24. The method according to Claim 1, **characterized in that** the mother liquors from the earlier recrystallization are used again in the method as process solutions.

## Revendications

1. Procédé pour produire des solutions d'hydroxyde de césium, dans lequel
- A) un minerai contenant du césium est décomposé avec de l'acide sulfurique en formant ainsi un sulfate de césium et d'aluminium hydraté (alun de césium) peu soluble à froid,
- B) l'alun de césium formé est séparé des résidus de minerai solides en tant que solution,
- C) l'aluminium est précipité à partir de la solution d'alun de césium en formant ainsi une solution de sulfate de césium,
- D) la solution de sulfate de césium formée est mise en réaction avec de l'hydroxyde de baryum ou de l'hydroxyde de strontium en formant ainsi une solution d'hydroxyde de césium ; et
- E) la solution d'hydroxyde de césium formée est concentrée et purifiée,
**caractérisé en ce que** la décomposition A) est effectuée avec une quantité surstoechiométrique d'acide sulfurique par rapport à la quantité employée de minerai, dans lequel lors de la décomposition, le rapport de mélange du minerai contenant du césium, qui présente une fraction en Cs de 20 à 24 % en poids, par rapport à l'eau par rapport à l'acide sulfurique concentré, est égal à 1,0 : (1,2 à 1,6) : (1,2 à 1,6) et l'alun de césium formé B) est purifié avec de l'eau entièrement dessalée après la séparation des résidus de minerai solides par 6 recristallisations et après l'utilisation des liqueurs mères lors des 1^{re}, 2^{e} et 3^{e} recristallisations et après la mise en œuvre des 4^{e}, 5^{e} et 6^{e} recristallisations, la solution de sulfate de césium formée lors de C) est concentrée sur une teneur de 20 à 70 % en poids de sulfate de césium et est purifiée par la suite en ajoutant du charbon actif en tant qu'adjuvant de filtrage, dans lequel la quantité ajoutée de charbon actif va de 0,5 à 5 % en poids par rapport à la quantité dissoute de sulfate de césium, la mise en réaction D) est effectuée d'abord de manière stoechiométrique puis par l'ajout d'une autre base (de manière préférée Ba(OH)₂ ou Sr(OH)₂) au mélange réactionnel encore chaud entre 80 et 100 °C, dans lequel la quantité ajoutée de la base - par rapport à la quantité d'hydroxyde de césium - va de 0,7 à 3,5 % en poids et la solution d'hydroxyde de césium formée lors de E) est concentrée par évaporation sur une teneur en CsOH de 45 à 55 % en poids et est mélangée à du dioxyde de carbone ou à un carbonate ou carbonate d'hydrogène soluble dans la solution d'hydroxyde, dans lequel la quantité à employer ce faisant en dioxyde de carbone par rapport à 1 000 kg d'hydroxyde de césium est comprise entre 2,5 et 10 kg et les ajouts de carbonate ou de carbonate d'hydrogène correspondent à l'ajout de dioxyde de carbone et sont à imputer de manière correspondante.

2. Procédé selon la revendication 1, **caractérisé en ce que** le minerai contenant du césium présente une fraction en césium de 20 à 24 % en poids.

3. Procédé selon la revendication 1 ou 2, **caractérisé en ce que** le minerai contenant du césium présente une granulométrie de 90 % en poids, < 100 µm.

4. Procédé selon la revendication 1, **caractérisé en ce que** le rapport de mélange est de 1,0:(1,3 à 1,5):(1,3 à 1,5).

5. Procédé selon l'une quelconque des revendications 1 à 4, **caractérisé en ce que** la décomposition est effectuée de telle manière que le mélange composé de minerai contenant du césium, d'eau et d'acide sulfurique est réchauffé pendant une durée d'au moins 2 heures à une température > 90 °C.

6. Procédé selon la revendication 5, **caractérisé en ce que** la durée de décomposition est égale à au moins 3 heures.

7. Procédé selon la revendication 5 ou 6, **caractérisé en ce que** la température minimale est égale à 100 °C.

8. Procédé selon la revendication 7, **caractérisé en ce que** la température minimale est égale à 120 °C.

9. Procédé selon l'une quelconque des revendications 1 à 8, **caractérisé en ce que** la température de décomposition maximale correspond à la température d'ébullition du mélange réactionnel.

10. Procédé selon l'une quelconque des revendications 1 à 9, **caractérisé en ce que** de l'eau éventuellement évaporée est remplacée lors de la décomposition.

11. Procédé selon l'une quelconque des revendications 1 à 10, **caractérisé en ce que** la réaction de décomposition est effectuée sous surpression.

12. Procédé selon la revendication 11, **caractérisé en ce que** la surpression va de 0,5 à 6 bar.

13. Procédé selon la revendication 12, **caractérisé en ce que** la surpression va de 1 à 6 bar.

14. Procédé selon l'une quelconque des revendications 1 à 13, **caractérisé en ce que** pendant ou après la décomposition du mélange réactionnel, de l'aluminium est ajouté sous la forme de sulfate d'aluminium.

15. Procédé selon la revendication 14, **caractérisé en ce que** le rapport molaire entre Al et Cs est égal à au moins 1:1.

16. Procédé selon la revendication 14, **caractérisé en ce que** l'aluminium est ajouté en excédent par rapport au celsium présent et le rapport molaire entre Al et Cs est égal au maximum à 1,5:1.

17. Procédé selon l'une quelconque des revendications 1 à 16, **caractérisé en ce qu'**à l'issue de la réaction de décomposition, le mélange réactionnel est refroidi et de l'eau ou des solutions de processus issues d'étapes de procédé ultérieures (par exemple de la liqueur mère issue de la séparation qui suit de l'alun de Cs et/ou de la cristallisation qui suit) sont ajoutées lors du début de la cristallisation du sulfate de césium et d'aluminium hydraté (alun de celsium).

18. Procédé selon la revendication 17, **caractérisé en ce que** la quantité d'eau ajoutée ou la quantité de solution de processus ajoutée est égale à au moins 1,2 partie en poids par partie en poids de minerai employé.

19. Procédé selon l'une quelconque des revendications 1 à 18, **caractérisé en ce que** l'excédent d'acide est séparé à l'issue de la réaction de décomposition et du refroidissement du mélange réactionnel ainsi qu'éventuellement après la dilution du mélange réactionnel.

20. Procédé selon l'une quelconque des revendications 1 à 19, **caractérisé en ce que** pour séparer l'alun de césium formé des résidus de minerai solides, le mélange réactionnel obtenu après la séparation de l'excédent d'acide est dispersé dans de l'eau et/ou des solutions de processus à des températures d'au moins 80 °C et la solution chaude contenant de l'alun de césium est séparée des résidus de minerai.

21. Procédé selon l'une quelconque des revendications 1 à 19, **caractérisé en ce qu'**après la réaction de décomposition et avant le refroidissement du mélange réactionnel, l'alun de césium dissous est séparé du résidu de minerai conjointement avec l'acide sulfurique.

22. Procédé selon la revendication 21, **caractérisé en ce que** l'alun de césium est recristallisé à partir de la solution séparée contenant de l'alun de césium et de l'acide de décomposition.

23. Procédé selon l'une quelconque des revendications 1 à 21, **caractérisé en ce que** de l'alun de césium solide est cristallisé par refroidissement à partir de la solution d'alun de césium dont les résidus de minerai solides ont été éliminés.

24. Procédé selon la revendication 1, **caractérisé en ce que** les liqueurs mères issues de la recristallisation continuent à être employées préalablement dans le procédé en tant que solutions de processus.
